# EUROPÄISCHE PATENTSCHRIFT

(11) **EP 3 958 420 B1**
(45) Veröffentlichungstag und Bekanntmachung des Hinweises auf die Patenterteilung: **19.07.2023**
(21) Anmeldenummer: 21202843.5
(22) Anmeldetag: 15.01.2018
(51) Int. Cl.: H02H 7/16, H02H 9/00, H05B 45/355, H05B 45/38

(54) **SCHALTUNG ZUR EINSCHALTSTROMBEGRENZUNG BEI EINEM NETZTEIL**
CURRENT LIMITING CIRCUIT FOR POWER SUPPLY
CIRCUIT DE LIMITATION DE COURANT TRANSITOIRE DANS UN BLOC D'ALIMENTATION

(30) Priorität: 13.02.2017 DE 202017100740 U; 24.02.2017 AT 4017 U; 27.06.2017 AT 14017 U
(43) Veröffentlichungstag der Anmeldung: 23.02.2022
(62) Teilanmeldung aus: 18700487.4
(73) Patentinhaber: Tridonic GmbH & Co. KG, 6851 Dornbirn (AT)
(72) Erfinder: Stark, Stefan, 6835 Muntlix (AT); Hauer, Lukas, 6841 Mäder (AT); Schmölzer, Andreas, 6820 Frastanz (AT)
(74) Vertreter: Beder, Jens

(56) Entgegenhaltungen:
- EP-A2- 2 249 627
- US-A1- 2003 035 311
- US-A1- 2016 301 227

## Beschreibung

Die vorliegende Erfindung betrifft eine Schaltung zur Einschaltstrombegrenzung, die in Netzteilen von Betriebsgeräten zum Betreiben von Leuchtmitteln eingesetzt werden kann.

Netz- und Betriebsgeräte weisen eingangsseitig meist einen von einem Netzgleichrichter gespeisten Speicherkondensator auf, der beim Einschalten oder Anschießen des Netz- bzw. Betriebsgerätes an die Netzspannung kurzeitig einen sehr hohen Einschalt- bzw. Ladestrom bewirken kann. Die Höhe des Einschaltstroms hängt von der Kapazität, der Restladung und dem Einschaltzeitpunkt bezüglich des Verlaufs der Netzwechselspannung ab. Werden mehrere Leuchten mit solchen Betriebsgeräten als Gruppe gemeinsam eingeschaltet, können die sich addierenden Einschaltströme der Geräte ein Auslösen der vorgeschalteten Sicherung herbeiführen.

Um dies zu vermeiden schlägt die DE 10 2011 001990 A1 ein Verfahren zur Einschaltstrombegrenzung vor, bei dem die Speicherkondensatoren von durch eine Netzwechselspannung gespeisten Vorschaltgeräten zu verschiedenen Zeiten nahe dem Spannungsnulldurchgang verzögert eingeschaltet werden. Die einzelnen Einschaltzeitpunkte bestimmen sich aus unterschiedlichen Wartezeiten nach der Erfassung des Nulldurchgangs oder nach Erfassung eines Einschaltsignals. Gemäß der DE 10 2011 001990 A1 wird der Detektor für den Spannungsnulldurchgang und der ein Flipflop aufweisende Einschaltsignalgenerator von einem aus der gleichgerichteten Netzspannung gespeisten Kleinspannungserzeuger versorgt, um ein kontrolliertes Einschalten auch vor dem Erreichen des Betriebszustands zu ermöglichen.

Einfache Netzteile von Betriebsgeräten mit Gleichrichter und nachfolgendem Speicher-/Glättungskondensator erzeugen während des Betriebs im Stromnetz zudem Oberwellenströme, da das Netzteil dem Stromnetz nur dann einen Strom zum Nachladen des Speicherkondensators entnimmt, wenn die sinusförmige Eingangsspannung größer als die Spannung am Kondensator ist, was zu einer kurzzeitigen hohen Stromaufnahme führt.

Solchen Oberwellenströmen/Oberschwingungen kann durch eine Schaltung zur Korrektur des Leistungsfaktors (Power Factor Correction) mit einem Hochsetzsteller, auch Aufwärtswandler genannt (englisch Boost-Converter), entgegengewirkt werden. Dabei sind die Schaltzeiten des mit einer pulsweitenmodulierten Steuerspannung ein- und ausgeschalteten Schalters des Hochsetzstellers so gewählt, dass der Eingangsstrom der Schaltung einem sinusförmigen Verlauf folgt, der in Phase mit dem Verlauf der Eingangsspannung ist.

Eine Schaltung zur Einschaltstrombegrenzung bei einem Hochsetzsteller, in der ein Einschalten des Speicherkondensators erst im Nulldurchgang der gleichgerichteten, sinusförmigen Netzspannung erfolgt, ist aus der EP 0 637 118 A1 bekannt.

Für die Bestimmung des Nulldurchgangs und das Einschalten des Speicherkondensators in dem Zeitraum vom Netzanschluss bis zum Beginn des Ladevorgangs vor der Betriebsaufnahme des Netz- bzw. Betriebsgeräts, ist eine spezielle Schaltung nötig, die mit Energie versorgt werden muss. Dies macht die Geräte teuer und führt zu einem höheren Energieverbrauch.

Eine Schaltung gemäß dem Oberbegriff des beigefügten Anspruches 1 ist in der EP 2 249 627 A2 beschrieben.

Der Erfindung liegt die Aufgabe zugrunde, Vorrichtungen und Verfahren anzugeben, die die beschriebenen Probleme verringern. Aufgabe ist es insbesondere, eine Schaltungsanordnung zur Einschaltstrombegrenzung und ein Betriebsgerät für Leuchtmittel bereitzustellen, mit denen der Einschaltstrom verringert werden kann und die einen niedrigen Energieverbrauch und einem einfachen und kostengünstigen Aufbau aufweisen.

Diese Aufgabe wird gemäß den Merkmalen der unabhängigen Ansprüche gelöst. Die Erfindung wird durch die Merkmale der abhängigen Ansprüche weitergebildet.

Gemäß der vorliegenden Erfindung weist eine Schaltung zur Strombegrenzung beim Einschalten oder Anschließen eines Netzteils, das ein eigenständiges Gerät oder eine Baugruppe zur Energieversorgung in einem Gerät, beispielsweise einem Betriebsgerät zum Betreiben von Leuchtmitteln, sein kann, zumindest einen ersten Speicherkondensator, der eine Spannungsquelle für von dem Netzteil zu versorgende Komponenten bildet und von einer pulsierenden Gleichspannung geladen werden kann, einen Schalter zum Zuschalten der pulsierenden Gleichspannung (Ladespannung) an den ersten Speicherkondensator zur Betriebsaufnahme, eine Ermittlungs-Einrichtung zum Ermitteln eines Spannungsminimums der Ladespannung und zum Einschalten des Schalters bei einem Spannungsminimum, und eine Abschalteinrichtung zum Abschalten der Ermittlungs-Einrichtung nachdem der Schalter eingeschaltet wurde oder nach der Betriebsaufnahme, auf.

Zusätzlich kann eine Einrichtung zum Erzeugen einer Hilfsspannung zur Versorgung der Ermittlungs-Einrichtung vorgesehen sein, welche die Hilfsspannung aus der pulsierenden Gleichspannung erzeugt.

Die Abschalteinrichtung kann eine von dem Netzteil zu speisende Komponente darstellen, welche mit Energie versorgt und aktiviert wird, wenn der erste Speicherkondensator einen bestimmten Ladezustand bzw. einen stabilen Arbeitszustand (z.B. bestimmte Schwankungsbreite der Änderung im Ladezustand) erreicht.

Alternativ oder zusätzlich kann die Abschalteinrichtung durch eine zumindest das Netzteil steuernde Steuervorrichtung gebildet sein.

Die Ladespannung kann eine gleichgerichtete Wechselspannung sein, wobei die Ermittlungs-Einrichtung dazu ausgelegt ist, den Scheitelwert der gleichgerichteten Wechselspannung zu detektieren, den Zeitpunkt des Spannungsminimums auf der Grundlage des detektierten Scheitelwerts zu ermitteln und ab dem Zeitpunkt ein Einschaltsignal mittels einem von der Hilfsspannungs-Erzeugungseinrichtung und der Stromversorgungsanordnung speisbaren Latch oder Flip-Flop an den Schalter auszugeben.

Die Schaltung kann einen zweiten Speicherkondensator aufweisen, der gemeinsam mit dem ersten Speicherkondensator eine Spannungsquelle für an das Netzteil angeschlossene Komponenten bildet, wobei mittels dem Schalter der erste Speicherkondensator bezüglich des Beginns des Ladens des zweiten Speicherkondensators zeitverzögert eingeschaltet wird.

Die Gesamtkapazität nach der Betriebsaufnahme des Netzteils im stabilen Zustand wird aus beiden Speicherkondensatoren gebildet, wobei zur Reduzierung des Einschaltstroms die Speicherkondensatoren mittels des Schalters nacheinander mit dem Stromnetz verbunden werden und somit statt einem hohen Einschaltstromstoß zwei kleinere auftreten. Bei vielen Anwendungen sind aus Gründen der Baugröße oder Lebensdauer bereits mehrere parallel verschaltete Speicherkondensatoren vorgesehen, so dass die Aufteilung der Kapazität keine zusätzlichen Kosten verursacht und nur ein zusätzlicher Schalter und dessen Ansteuerung vorzusehen ist. Das Laden des zweiten Speicherkondensators kann sofort mit dem Einschalten oder Anschließen des Netzteils erfolgen.

Die Ansteuerung des Schalters zum Beginnen des Ladens des ersten Speicherkondensators kann von einer Steuereinrichtung des Netzteils, wie einem Mikrocontroller, erfolgen, die eine von dem Netzteil zu speisende Komponente darstellt und die das Einschalten des Schalters mit ihrer Betriebsaufnahme bei einem Spannungsminimum oder zu einem späteren Zeitpunkt bei einem Spannungsminimum veranlasst, wobei die Betriebsaufnahme zu einem Zeitpunkt erfolgt, bei dem der mit dem Stromnetz verbundene zweite Speicherkondensator einen stabilen Arbeitszustand bzw. einen bestimmten Ladezustand erreicht hat. Der Schalter kann ein Bipolartransistor mit isolierter Gate-Elektrode sein.

Die zwei oder mehr Speicherkondensatoren können gleiche oder unterschiedliche Kapazitäten aufweisen. Der erste Speicherkondensator kann größer als der zweite Speicherkondensator sein. Da beim Einschalten und dem damit verbundenen Ladebeginn des zweiten Kondensators auch andere Bauteilekapazitäten geladen werden, wird so vermieden, dass der Einschaltpeak des zweiten Kondensators größer ist als beim ersten Kondensator. Insbesondere ist auch von Vorteil, dass der erste Speicherkondensator bei einem Spannungsminimum der Ladespannung eingeschaltet wird, wodurch beide Einschaltströme weiter verringert werden. Zumindest die Ermittlungs-Einrichtungen kann separat aufgeführt oder in eine Steuereinrichtung intergiert sein.

Die Steuereinrichtung kann zudem dazu ausgebildet sein, den ersten und/oder die weiteren Speicherkondensatoren in Abhängigkeit der von dem Netzteil abzugebenden Leistung zu- und/oder abzuschalten.

Die Schaltung kann eine Leistungsfaktor-Korrekturschaltung sein und/oder Bestandteil in einem Betriebsgerät für Leuchtmittel sein.

Gemäß der vorliegenden Erfindung weist ein Betriebsgerät für Leuchtmittel eine der beschriebenen Schaltungen auf.

Nachfolgend wird die Erfindung anhand der beiliegenden Zeichnungen näher erläutert. Es zeigen:
Fig. 1: eine Schaltung zur Einschaltstrombegrenzung bei einem Netzteil nach einem ersten Ausführungsbeispiel gemäß der vorliegenden Erfindung,
Fig. 2: eine Schaltung zur Einschaltstrombegrenzung bei einem Netzteil nach einem zweiten Ausführungsbeispiel gemäß der vorliegenden Erfindung,
Fig. 3: eine Schaltung einer Hilfsspannungs-Erzeugungseinrichtung nach einem Ausführungsbeispiel gemäß der vorliegenden Erfindung,
Fig. 4: eine Schaltung eines Ladespannung-Detektors nach einem Ausführungsbeispiel gemäß der vorliegenden Erfindung, und
Fig. 5: eine Schaltung einer Schalteransteuerungs-Einrichtung nach einem Ausführungsbeispiel gemäß der vorliegenden Erfindung.

Komponenten mit gleichen Funktionen sind in den Figuren mit gleichen Bezugszeichen gekennzeichnet.

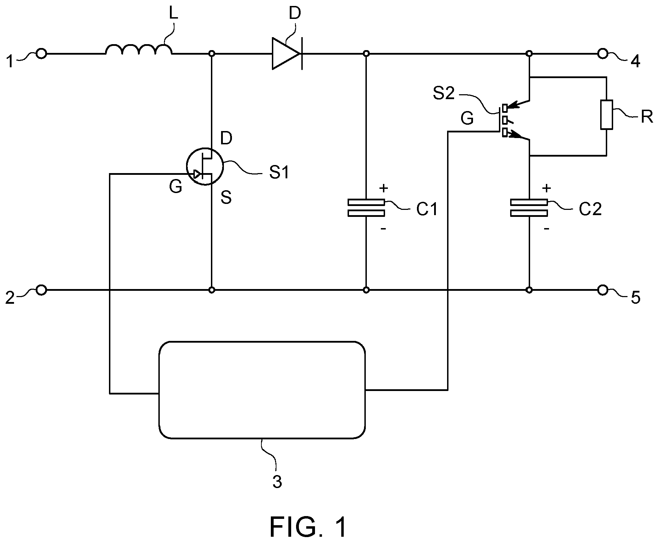

Fig. 1 zeigt ein Schaltbild einer Schaltung zur Korrektur des Leistungsfaktors mit Einschaltstrombegrenzung, welche in einem Netzteil eines Betriebsgeräts für Leuchtmittel eingesetzt werden kann und der über die Eingangsanschlüsse 1 und 2 eine von einem Netzgleichrichter des Netzteils (nicht gezeigt) gleichgerichtete Wechselspannung zuführbar ist, mit der zunächst der erste Speicherkondensator C1 und dann der zweite Speicherkondensator C2 geladen wird.

Zur Korrektur des Leistungsfaktors weist die Schaltung einen aus einem Schalter S1, einer Spule L, einer Diode D, und den Speicherkondensatoren C1 und C2 bestehenden Hochsetzsteller auf, der von einer Steuereinrichtung 3 gesteuert oder geregelt wird. Die Speicherkondensatoren C1 und C2 bilden im Betrieb des Hochsetzstellers gemeinsam eine Spannungsquelle für an den Ausgangsanschlüssen 4 und 5 angeschlossene Verbraucher. Mit den Ausgangsanschlüssen 4 und 5 können eine oder mehrere Versorgungseinrichtungen verbunden sein, welche eine Versorgungsspannung für die Steuereinrichtung 3 und andere Komponenten der Schaltung erzeugen.

Zusätzlich weist die Schaltung einen von der Steuereinrichtung 3 steuerbaren Schalter S2 auf, mit dem der zum ersten Speicherkondensator C1 parallel geschaltete zweite Speicherkondensator C2 von diesem bis zum Zeitpunkt der Betriebsaufnahmen des Hochsetzstellers getrennt werden kann.

Zumindest einer der Schalter S1 und S2 kann ein Leistungsschalter, ein Feldeffekttransistor, ein Bipolartransistor oder ein Transistor mit isolierter Gateelektrode sein.

Die Steuereinrichtung 3 kann eine integrierte Halbleiterschaltung sein oder eine integrierte Halbleiterschaltung umfassen. Die Steuereinrichtung 3 kann als ein Prozessor, ein Mikroprozessor, ein Controller, ein Mikrocontroller oder eine anwendungsspezifische Spezialschaltung (ASIC, "Application Specific Integrated Circuit") oder als eine Kombination der genannten Einheiten ausgestaltet sein. In dem Beispiel sind die Schalter S1 und S2 als separate Bauteile ausgeführt. Es ist jedoch auch möglich, dass zumindest der Schalter S2 bzw. dessen Schaltfunktion von der als Mikrocontroller ausgebildeten Steuereinrichtung 3 selbst ausgeführt wird.

Die Spule L ist mit der Diode D zwischen dem Eingangsanschluss 1 und einem Ausgangsanschluss 4 in Serie geschaltet. Der Schalter S1 ist mit einem Anschluss zwischen der Spule L und der Diode D und dem anderen Anschluss an den Eingangsanschluss 2 angekoppelt, welcher mit dem Ausgangsanschluss 5 verbunden ist und ein niedriges Potential (z.B. Masse) gegenüber dem Eingangsanschluss 1 aufweist.

Gemäß der vorliegenden Erfindung ist zum Zeitpunkt des Anschlusses des Netzteils an die Netzspannung oder des Einschaltens des Netzteils bzw. Betriebsgeräts der Schalter S2 geöffnet, so dass lediglich der erste Speicherkondensator C1 über die Spule L und die Diode D von dem vom Wechselrichter gelieferten Strom geladen wird. Ist der Speicherkondensator C1 komplett entladen und hat der pulsierende Gleichstrom zum Zeitpunkt des Einschaltens/Anschlusses einen Scheitelwert, fließt ein erster maximaler Ladestrom, der jedoch durch die in den zweiten Speicherkondensator C2 ausgelagerte Kapazität reduziert ist.

Der zweite Speicherkondensator C2 kann nach dem Abfallen des ersten Ladestroms eingeschaltet werden. In dem in Fig. 1 gezeigten Beispiel schaltet die Steuereinrichtung 3 den Schalter S2 ein. Die Steuereinrichtung 3 wird mit der an den Ausgangsanschlüssen 4, 5 bereitgestellten Energie bzw. von der Versorgungseinrichtung versorgt und nimmt ihren Betrieb auf bzw. schaltet den Schalter S2 ein, sobald an den Ausgangsanschlüssen 4, 5 eine bestimmte Spannung anliegt. Es ist jedoch auch möglich, dass der Schalter S2 erst nach Ablauf einer vorgegebenen oder zufällig gewählten Wartezeit geschlossen wird. Das Einschalten des Schalters S2 kann auch durch ein von der Steuereinrichtung 3 empfangenes Einschaltsignal erfolgen, mittels dem das Einschalten einer Vielzahl von Schaltern S2 anderer, an der gleichen Netzphase angeschlossener Netzgeräte so abgestimmt wird, dass zumindest ein Teil der Schalter S2 nicht zur gleichen Zeit eingeschaltet wird.

Gemäß einem Ausführungsbeispiel der vorliegenden Erfindung wird für das Einschalten des Schalters S2 von der Steuereinrichtung 3 oder einem zusätzlichen Detektor im Verlauf der Ladespannung des zweiten Speicherkondensators C2 der Zeitpunkt des Spannungsminimums ermittelt und der Schalter S2 bei oder nahe dem ermittelten Zeitpunkt eingeschaltet. Hierzu kann die Steuereinrichtung 3 beispielsweise den Spannungsverlauf an den Eingangsanschlüsse 1 und 2 erfassen und den Zeitpunkt des Spannungsminimums auf der Grundlage der Netzfrequenz berechnen oder das Minimum selbst detektieren.

Sind die beiden Speicherkondensatoren C1 und C2 geladen bzw. der Schalter S2 eingeschaltet, steuert die Steuereinrichtung 1 im pulsweitenmodulierten Betrieb des Hochsetzstellers die Schaltzeiten des Schalters S1 so, dass der Eingangsstrom der Schaltung einem sinusförmigen Verlauf folgt, der in Phase mit dem Verlauf der Eingangsspannung ist. Dabei fließt, wenn der Schalter S1 von der Steuereinrichtung 1 eingeschaltet wird, ein Strom von dem Eingangsanschluss 1 durch die Spule L, den Schalter S1 zum Eingangsanschluss 2. Nach dem Ausschalten des Schalters S1 treibt die Spule L einen Strom (Abmagnetisierungstrom) durch die Diode D und einen Strom durch die Speicherkondensatoren C1 und C2, welche dadurch nachgeladen werden.

Des Weiteren kann auch der Betriebszustand des Betriebsgerätes berücksichtigt werden. Kurze Netzunterbrüche und/oder Busspannungssprünge können einen Neustart des Betriebsgerätes verursachen. Die Schaltsignal-Abgabeeinrichtung 8 würde bei kurzzeitigen Netzunterbrüchen und/oder Busspannungssprüngen nicht schnell genug entladen, um den Schalter S2 auszuschalten. Das könnte dazu führen, dass der Schalter S2 eingeschaltet bleibt und beim Neustart des Betriebsgerätes keine Einschaltstrombegrenzung gewährleistet werden kann. Kurze Netzunterbrüche und/oder Busspannungssprünge, welche als Fehler erkannt werden können und als Betriebszustand in der Steuereinrichtung 3 gespeichert werden, können bei der Einschaltstrombegrenzung berücksichtigt werden. Dabei kann der Schalter S2 bei Erkennen von kurzen Netzunterbrüchen und/oder Busspannungssprüngen geöffnet werden, um eine Einschaltstrombegrenzung beim Neustart des Betriebsgerät zu gewährleisten.

Alternativ kann die Leistungskorrekturfaktorschaltung des Betriebsgerätes einen NTC Widerstand R aufweisen, welcher parallel zum Schalter S2 angeordnet ist und einen negativen Temperaturkoeffizienten aufweist. Bei einem Einschalten des Netzteils bzw. des Betriebsgeräts kann ein Verhalten bzw. ein Ablauf wie vorhin beschrieben auftreten. Zusätzlich kann der NTC Widerstand R eine anfängliche Strombegrenzung darstellen, um den Speicherkondensator C2 langsam zu laden, dieser Vorgang kann einige ms andauern. Nach dieser Zeit, vorzugsweise wenn der NTC Widerstand R keine Strombegrenzung mehr ermöglicht, da dieser bei einer Erwärmung seinen Widerstandswert verkleinert, kann der Schalter S2 aktiviert werden und den NTC Widerstand R überbrücken. Zusätzlich oder alternativ können die beiden Speicherkondensatoren C1 und C2 parallel verbunden sein und mit einem Schalter und/oder einem NTC Widerstand R in Serie verbunden sein. Dabei kann der NTC Widerstand R parallel zum Schalter angeordnet sein und wieder eine anfängliche Strombegrenzung bei einem Einschalten des Netzteils bzw. des Betriebsgeräts ermöglichen. Wenn sich der NTC Widerstand R erwärmt hat, kann der Schalter S2 den NTC Widerstand R überbrücken.

Alternativ kann der Widerstand R ein PTC mit positiven Temperaturkoeffizient sein. Dabei kann der Widerstand R bei Vorliegen eines Kurzschlusses des Schalters S2, welches ansonsten zu einem Ausfall des Betriebsgerätes führt, den Strom durch den Speicherkondensator C2 begrenzen und somit ein Zerstören des Betriebsgerätes verhindern.

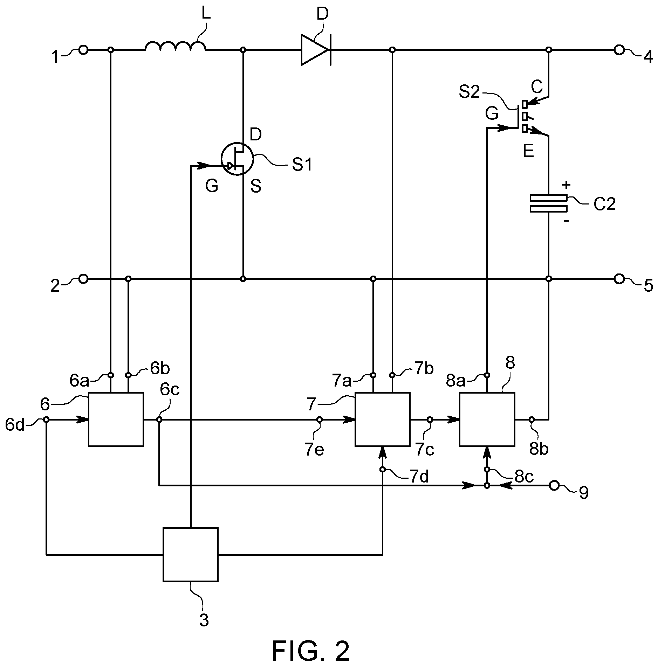

Fig. 2 zeigt eine Schaltung zur Korrektur des Leistungsfaktors mit Einschaltstrombegrenzung nach einem zweiten Ausführungsbeispiel gemäß der vorliegenden Erfindung, in der der erste Speicherkondensator C1 fehlt. Dieser ist optional und kann bei Bedarf hinzugefügt werden.

Bei der in der Fig. 2 gezeigten Schaltung erfolgt ein Einschalten des Speicherkondensators C2 bzw. des Schalters S2 bei oder nahe einem Spannungsminimum der Ladespannung des Speicherkondensators C2. Hierzu weist die Schaltung eine Hilfsspannungs-Erzeugungseinrichtung 6 auf, die mit den Eingangsanschlüssen 1 und 2 verbunden ist und aus der an den Eingangsanschlüssen 1 und 2 anliegenden pulsierenden Gleichspannung eine Hilfsspannung für die Detektion des Spannungsminimums und das Einschalten des Schalters S2 erzeugt.

Ein von der Hilfsspannungs-Erzeugungseinrichtung 6 gespeister Detektor 7 ist mit den Ausgangsanschlüssen 4 und 5 verbunden, ermittelt ein Spannungsminimum der pulsierenden Gleichspannung bzw. den Zeitpunkt, bei dem die pulsierende Gleichspannung auf null abgefallen ist und gibt einen Schaltimpuls zu oder nahe diesem Zeitpunkt an eine Schaltsignal-Abgabeeinrichtung 8 aus. Die von der Hilfsspannungs-Erzeugungseinrichtung 6 gespeiste Schaltsignal-Abgabeeinrichtung 8 erzeugt bei Empfang des Schaltimpulses ein Einschaltsignal für den Schalter S2 und schaltet diesen ein, so dass das Laden des Speicherkondensators C2 bei dem ermittelten Spannungsminimum beginnt, was einen geringen Einschaltstrom bewirkt. Der Ladestrom/Einschaltstrom fließt dabei von dem Eingangsanschluss 1, über die Spule L, die Diode D, den geschlossenen Schalter S2 und den Speicherkondensator C2 zu dem Eingangsanschluss 2. Der Schalter S1 ist geschlossen und die Steuereinrichtung 3 noch inaktiv.

Die Steuereinrichtung 3 wird aktiviert und mit der an den Ausgangsanschlüssen 4, 5 bereitgestellten Energie bzw. von der Versorgungseinrichtung versorgt, wenn die Spannung an den Ausgangsanschlüssen 4, 5 oder der Ladestrom einen stabilen Zustand (konstanter mittlerer Ladestrom/Spannung) erreicht hat. Eine Versorgung der Schaltsignal-Abgabeeinrichtung 8 mit der an den Ausgangsanschlüssen 4, 5 bereitgestellten Energie bzw. von der Versorgungseinrichtung ist auch über den Anschluss 9 möglich. Sobald die Steuereinrichtung 3 aktiviert ist oder die Schaltung den Betrieb aufgenommen hat (Steuereinrichtung 3 steuert den Schalter S1), werden die Hilfsspannungs-Erzeugungseinrichtung 6 und der Detektor 7 von der Steuereinrichtung 3 abgeschaltet, um Energie zu sparen.

In der in der Fig. 1 gezeigten Schaltung steuert die Steuereinrichtung 3 den Schalter S2. Es ist jedoch auch möglich den Schalter S2 mittels der die Hilfsspannungs-Erzeugungseinrichtung 6, den Detektor 7 und die Schaltsignal-Abgabeeinrichtung 8 aufweisenden Anordnungen zu schalten.

Die Hilfsspannungs-Erzeugungseinrichtung 6 kann zur Erzeugung der Hilfsspannung Primärzellen oder über die Eingangsanschlüsse 1 und 2 ladbare Sekundärzellen aufweisen.

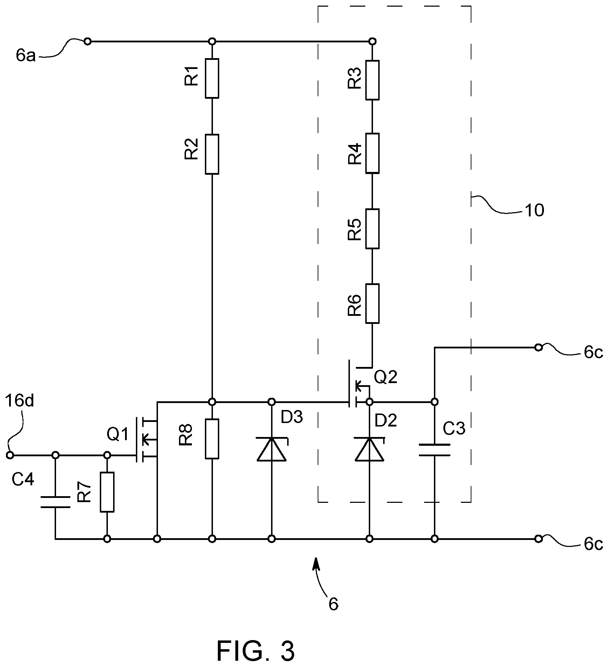

Fig. 3 zeigt eine Schaltung der Hilfsspannungs-Erzeugungseinrichtung 6 nach einem Ausführungsbeispiel gemäß der vorliegenden Erfindung, bei der die Hilfsspannung mittels einer mit einem Pufferkondensator C3 parallel geschalteten Z-Diode D2 erzeugt wird. Die Anode der Z-Diode D2 ist über einen Schalter Q2 und eine Reihenschaltung aus vier Widerständen R3..R6 mit dem Eingangsanschluss 1 bzw. Schaltungspunkt 6a verbunden.

Die Widerstände R3..R6, die Z-Diode D2 und der Pufferkondensator C3 bilden einen Kleinspannungserzeuger 10 zum Erzeugen der Hilfsspannung, welche zwischen den Schaltungspunkten 6c und 6d, parallel zum Pufferkondensator C3, anliegt. Die anderen Elemente der Schaltung, insbesondere die Schalter Q1 und Q2, dienen der Abschaltfunktion der Hilfsspannungs-Erzeugungseinrichtung 6.

Beim Anliegen der gleichgerichteten Wechselspannung an den Eingangsanschlüssen 1 und 2 bzw. den Schaltungspunkten 6a und 6b wird mit dem aus den Widerständen R1..R3 bestehenden Spannungsteiler eine Spannung zum Einschalten des Schalter Q2 erzeugt. Zum Abschalten der Hilfsspannungs-Erzeugungseinrichtung 6 sendet die Steuereinrichtung 3 ein Einschaltsignal über den Schaltungspunkt 6d an den Schalter Q1, welcher die Spannung an dem Schalter Q2 absenkt, so dass dieser den Kleinspannungserzeuger 10 abschaltet.

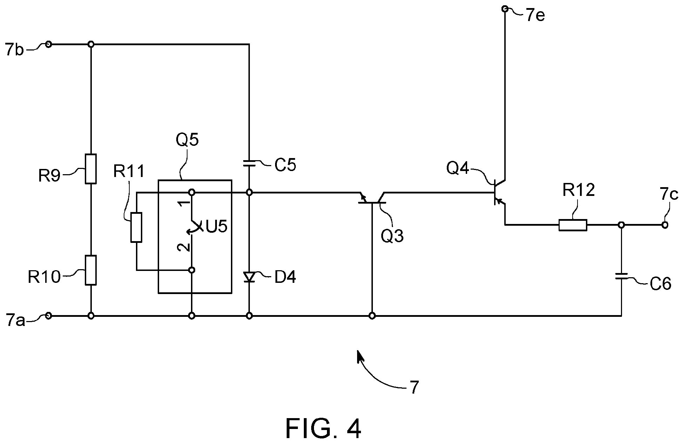

Fig. 4 zeigt eine Schaltung des Detektors 7 nach einem Ausführungsbeispiel gemäß der vorliegenden Erfindung, bei dem in einem ersten Schritt in dem Verlauf der gleichgerichteten Wechselspannung ein Scheitelwert detektiert und in einem zweiten Schritt nach Ablauf von einem Viertel der Periodenlänge der Netzspannung ein Einschaltsignal ausgegeben wird.

Die Schaltung des Detektors 7 weist einen Kondensator C5 und eine Diode 4 auf, die in Reihe zwischen den Eingangsanschlüssen 1 und 2 bzw. den Schaltungspunkten 7b und 7a geschaltet sind. Die Diode 4 ist mit einem über einen Schalter Q5 kurzschließbaren Widerstand R11 parallel verbunden und zwischen dem Kondensator C5 und der Diode D4 ist der Emitter-Anschluss eines Bipolartransistors Q3 angekoppelt, welcher einen Schalter Q4 steuert.

Ein Kondensator C6 ist über einen Widerstand R12 und den geschlossenen Schalter Q4 mit der an dem Schaltungspunkt 7e anliegenden Hilfsspannung ladbar. Der Kondensator C6 und der Widerstand R12 sind so bemessen, dass die Spannung am Kondensator C6 bzw. zwischen den Schaltungspunkten 7a und 7c nach dem Ablauf von einem Viertel der Periodenlänge einen Spannungswert (z.B. den der Hilfsspannung) erreicht, bei dem die mit dem Schaltungspunkt 7c verbundene Schaltsignal-Abgabeeinrichtung 8 ein Einschaltsignal erzeugt (zweiter Schritt). Das Laden des Kondensators C6 wird mit dem Einschalten des Schalters Q4 gestartet.

Der Scheitelwert wird mittels dem Kondensator C5 detektiert. Dieser lädt sich mit dem Ansteigen der gleichgerichteten Wechselspannung und entlädt sich mit deren Abfallen. Ist die Spannung am Emitter-Anschluss des Bipolartransistors Q3 null (Scheitelpunkt), wird der Schalter Q4 eingeschaltet.

Aufgabe der Schaltsignal-Abgabeeinrichtung 8 ist es, ein stabiles, von dem weiteren Spannungsverlauf am Kondensator C6 unabhängiges Einschaltsignal für den Schalter S2 zu erzeugen. Dies kann mit einem sowohl über den Anschluss 9 als auch von der Hilfsspannungs-Erzeugungseinrichtung 6 speisbaren Flipflop oder Latch erreicht werden.

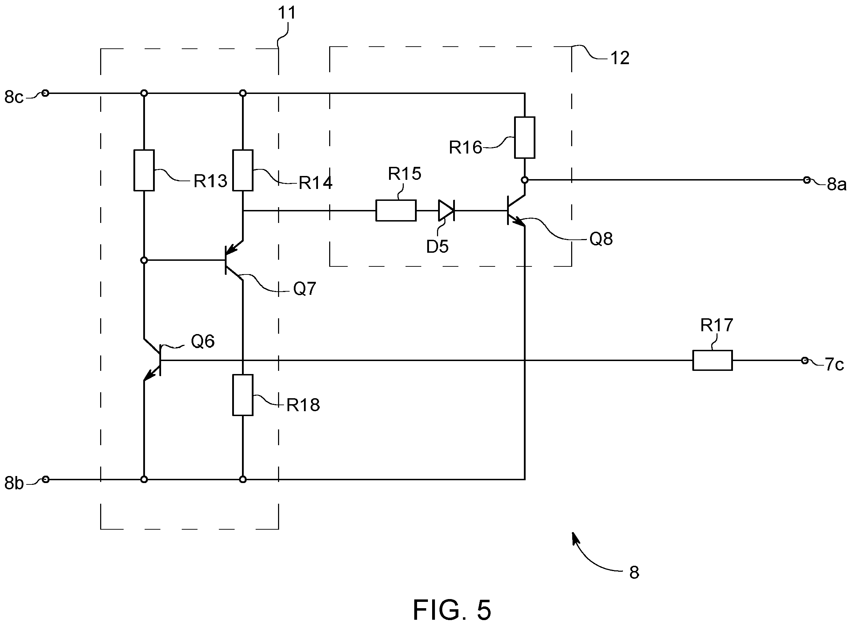

Fig. 5 zeigt eine Schaltung der Schaltsignal-Abgabeeinrichtung 8 nach einem Ausführungsbeispiel gemäß der vorliegenden Erfindung, die aus einem Latch 11 und einem Inverter 12 gebildet ist. Erreicht der Spannungswert am Schaltungspunkt 7c den vorgegebenen Spannungswert (Hilfsspannung), fällt die Spannung am Kollektor-Anschluss des Bipolartransistor Q7 auf null und der Inverter 12 springt von dem Potential am Schaltungspunkt 8b auf das Potential am Schaltungspunkt 8c, was dem Einschaltsignal für den Schalter S2 entspricht.

## Patentansprüche

1. Schaltung zur Einschaltstrombegrenzung bei einem Netzteil, aufweisend
einen ersten Speicherkondensator (C2), der eine Spannungsquelle für von dem Netzteil zu versorgende Komponenten bildet,
einen Schalter (S2) zum Zuschalten einer pulsierenden Gleichspannung an den ersten Speicherkondensator (C2), um den ersten Speicherkondensator (C2) zu laden, und
eine Ermittlungs-Einrichtung (7, 8) zum Ermitteln eines Spannungsminimums der pulsierenden Gleichspannung und zum Einschalten des Schalters (S2) bei einem Spannungsminimum,
**gekennzeichnet durch**
eine Abschalteinrichtung (3) zum Abschalten der Ermittlungs-Einrichtung (7, 8) nachdem der Schalter (S2) eingeschaltet wurde.

2. Schaltung nach Anspruch 1, mit
einer Einrichtung (6) zum Erzeugen einer Hilfsspannung zur Versorgung der Ermittlungs-Einrichtung (7, 8).

3. Schaltung nach Anspruch 2, wobei
die Einrichtung (6) zum Erzeugen der Hilfsspannung dazu ausgelegt ist, die Hilfsspannung aus der pulsierenden Gleichspannung zu erzeugen.

4. Schaltung nach einem der Ansprüche 1 bis 3, wobei
die Abschalteinrichtung (3) eine von dem Netzteil zu speisende Komponente darstellt, welche mit Energie versorgt und aktiviert wird, wenn der erste Speicherkondensator (C2) einen bestimmten Ladezustand erreicht.

5. Schaltung nach einem der Ansprüche 1 bis 4, wobei
die Abschalteinrichtung (3) durch eine zumindest das Netzteil steuernde Steuervorrichtung (3) gebildet ist.

6. Schaltung nach Anspruch 5, wobei
die Schaltung eine Leistungsfaktor-Korrekturschaltung ist, und
die Steuervorrichtung (3) dazu ausgelegt ist, die Leistungsfaktor-Korrektur zu steuern.

7. Schaltung nach einem der Ansprüche 1 bis 6, wobei
die pulsierende Gleichspannung eine gleichgerichtete Wechselspannung ist, und
die Ermittlungs-Einrichtung (7, 8) dazu ausgelegt ist, den Scheitelwert der gleichgerichteten Wechselspannung zu detektieren, den Zeitpunkt des Spannungsminimums auf der Grundlage des detektierten Scheitelwerts zu ermitteln und ab dem Zeitpunkt ein Einschaltsignal mittels einem von der Hilfsspannungs-Erzeugungseinrichtung (6) und der Stromversorgungsanordnung speisbaren Latch (11) oder Flip-Flop an den Schalter (S2) auszugeben.

8. Schaltung nach Anspruch 1, wobei
die Schaltung einen zweiten Speicherkondensator (C1) aufweist, der gemeinsam mit dem ersten Speicherkondensator (C2) die Spannungsquelle für von dem Netzteil zu versorgende Komponenten bildet, und
die Schaltung dazu ausgelegt ist, mittels dem Schalter (S2) den ersten Speicherkondensator (C2) bezüglich des Beginns des Ladens des zweiten Speicherkondensators (C1) zeitverzögert einzuschalten.

9. Schaltung nach Anspruch 8, wobei
die Ermittlungs-Einrichtung (7, 8) in eine Steuereinrichtung (3) intergiert ist, und
die Steuereinrichtung (3) eine von dem Netzteil zu speisende Komponente darstellt und das Einschalten des Schalters (S2) bei einem Spannungsminimum mit ihrer Betriebsaufnahme oder zu einem späteren Zeitpunkt veranlasst, wobei die Betriebsaufnahme zu einem Zeitpunkt erfolgt, bei dem der mit einem Stromnetz verbundene zweite Speicherkondensator (C1) einen stabilen Arbeitszustand bzw. einen bestimmten Ladezustand erreicht hat.

10. Schaltung nach Anspruch 9, wobei
die Steuereinrichtung (3) dazu ausgelegt ist, den ersten Speicherkondensator (C2) in Abhängigkeit der von dem Netzteil abzugebenden Leistung zu- und/oder abzuschalten.

11. Betriebsgerät für Leuchtmittel aufweisend eine Schaltung nach einem der Ansprüche 1 bis 10.

## Claims

1. Circuit for inrush-current limiting in a power supply unit, comprising
a first storage capacitor (C2) which forms a voltage source for components to be supplied by the power supply unit,
a switch (S2) for activating a pulsating DC voltage to the first storage capacitor (C2) in order to charge the first storage capacitor (C2), and
a determination device (7, 8) for determining a voltage minimum of the pulsating DC voltage and for switching on the switch (S2) at a voltage minimum,
**characterized by**
a shut-off device (3) for shutting off the determination device (7, 8) after the switch (S2) has been switched on.

2. Circuit according to claim 1, comprising
a device (6) for generating an auxiliary voltage for supplying the determination device (7, 8).

3. Circuit according to claim 2, wherein
the device (6) for generating the auxiliary voltage is designed to generate the auxiliary voltage from the pulsating DC voltage.

4. Circuit according to any of claims 1 to 3, wherein
the shut-off device (3) represents a component to be supplied by the power supply unit, which component is supplied with energy and is activated when the first storage capacitor (C2) reaches a particular charge state.

5. Circuit according to any of claims 1 to 4, wherein
the shut-off device (3) is formed by a control apparatus (3) controlling at least the power supply unit.

6. Circuit according to claim 5, wherein
the circuit is a power factor correction circuit, and
the control apparatus (3) is designed to control the power factor correction.

7. Circuit according to any of claims 1 to 6, wherein
the pulsating DC voltage is a rectified AC voltage, and
the determination device (7, 8) is designed to detect the peak value of the rectified AC voltage, to determine the time of the voltage minimum on the basis of the detected peak value and, from the time, to output a switch-on signal to the switch (S2) by means of a latch (11) or flip-flop which can be supplied by the auxiliary voltage generating device (6) and the power supply arrangement.

8. Circuit according to claim 1, wherein
the circuit has a second storage capacitor (C₁) which, together with the first storage capacitor (C2), forms the voltage source for components to be supplied by the power supply unit, and
the circuit is designed to switch on, by means of the switch (S2), the first storage capacitor (C2) in a time-delayed manner with respect to the start of the charging of the second storage capacitor (C1).

9. Circuit according to claim 8, wherein
the determination device (7, 8) is integrated in a control device (3), and
the control device (3) represents a component to be supplied by the power supply unit and prompts, together with its startup or at a later time, the switching on of the switch (S2) at a voltage minimum, wherein the startup takes place at a point in time at which the second storage capacitor (C1) connected to a power grid has reached a stable working state or a particular charging state.

10. Circuit according to claim 9, wherein
the control device (3) is designed to activate and/or shut off the first storage capacitor (C2) on the basis of the power to be output by the power supply unit.

11. Operating apparatus for lighting means, comprising a circuit according to any of claims 1 to 10.

## Revendications

1. Circuit destiné à la limitation de courant d'allumage dans un bloc d'alimentation, présentant
un premier condensateur de stockage (C2), qui forme une source de tension pour un composant devant être alimenté par le bloc d'alimentation,
un commutateur (S2) pour l'actionnement d'une tension continue pulsée au niveau du premier condensateur de stockage (C2) afin de charger le premier condensateur de stockage (C2), et
un dispositif de détection (7, 8) pour la détection d'une tension minimum de la tension continue pulsée et pour l'allumage du commutateur (S2) à une tension minimum,
**caractérisé par**
un dispositif d'arrêt (3) pour la mise à l'arrêt du dispositif de détection (7, 8) après l'allumage du commutateur (S2).

2. Circuit selon la revendication 1, comportant
un dispositif (6) pour la génération d'une tension auxiliaire pour l'alimentation du dispositif de détection (7, 8).

3. Circuit selon la revendication 2, dans lequel
le dispositif (6) pour la génération de la tension auxiliaire est conçu pour générer la tension auxiliaire à partir de la tension continue pulsée.

4. Circuit selon l'une des revendications 1 à 3, dans lequel
le dispositif d'arrêt (3) représente un composant devant être alimenté par le bloc d'alimentation, lequel est alimenté en énergie et activé lorsque le premier condensateur de stockage (C2) atteint un état de charge défini.

5. Circuit selon l'une des revendications 1 à 4, dans lequel
le dispositif d'arrêt (3) est formé par un dispositif de commande (3) commandant au moins le bloc d'alimentation.

6. Circuit selon la revendication 5, dans lequel
le circuit est un circuit de correction de facteur de puissance, et
le dispositif de commande (3) est conçu pour commander la correction du facteur de puissance.

7. Circuit selon l'une des revendications 1 à 6, dans lequel
la tension continue pulsée est une tension alternative redressée, et
le dispositif de détection (7, 8) et conçu pour détecter la valeur de crête de la tension alternative redressée, pour déterminer le moment de la tension minimum sur la base de la valeur de crête détectée et pour émettre à partir du moment un signal d'allumage vers le commutateur (S2) au moyen d'un circuit de verrouillage (11) ou bascule bistable pouvant être alimenté(e) par le dispositif de génération de tension auxiliaire (6) et le dispositif d'alimentation.

8. Circuit selon la revendication 1, dans lequel
le circuit présente un second condensateur de stockage (C1), qui forme ensemble avec le premier condensateur de stockage (C2) la source de tension pour le composant devant être alimenté par le bloc d'alimentation, et
le circuit est conçu pour allumer le premier condensateur de stockage (C2) au moyen du commutateur (S2) avec un retard temporel par rapport au début de la charge du second condensateur de stockage (C1).

9. Circuit selon la revendication 8, dans lequel
le dispositif de détection (7, 8) est intégré dans un dispositif de commande (3), et
le dispositif de commande (3) représente un composant devant être alimenté par le bloc d'alimentation et suscite l'allumage du commutateur (S2) à une tension minimum lors de sa mise en marche ou à un moment ultérieur, la mise en marche se produisant à un moment auquel le second condensateur de stockage (C1) connecté à un réseau électrique a atteint un état de fonctionnement stable ou un état de charge défini.

10. Circuit selon la revendication 9, dans lequel
le dispositif de commande (3) est conçu pour actionner et/ou arrêter le premier condensateur de stockage (C2) en fonction de la puissance à fournir par le bloc d'alimentation.

11. Appareil de fonctionnement pour des moyens lumineux, présentant un circuit selon l'une des revendications 1 à 10.
